# EUROPEAN PATENT APPLICATION

(11) **EP 4 832 220 A1**
(43) Date of publication of application: **28.10.2026**
(21) Application number: 24928055.3
(22) Date of filing: 12.09.2024
(51) Int. Cl.: H01M 50/449, H01M 50/491, H01M 10/0525, H01M 50/431, H01M 50/414, H01M 50/497

(54) **COMPOSITE POROUS MEMBRANE, PREPARATION METHOD THEREFOR, BATTERY AND ELECTRICAL DEVICE**

(30) Priority: 06.03.2024 CN 202410257539
(71) Applicant: Contemporary Amperex Technology Co., Limited, Ningde, Fujian 352100 (CN)
(72) Inventor: YUN, Liang, Ningde, Fujian 352100 (CN); SUN, Xin, Ningde, Fujian 352100 (CN); CHEN, Xingbu, Ningde, Fujian 352100 (CN); LI, Xuan, Ningde, Fujian 352100 (CN)
(74) Representative: Ziebig Hengelhaupt Intellectual Property Attorneys Patentanwaltskanzlei PartGmbB
(86) International application number: PCT/CN2024/118534
(87) International publication number: WO 2025/185124

(57) **Abstract**

Disclosed in the present application are a composite porous membrane, a preparation method therefor, a battery and an electrical device. The composite porous membrane comprises an organic polymer substrate and an inorganic electrolyte, the inorganic electrolyte being dispersed in the organic polymer substrate. A plurality of holes of different diameters are formed in the composite porous membrane, the ionic conductivity of the composite porous membrane being 1×10⁻⁴ S/cm - 5×10⁻⁴ S/cm. Thus, the organic polymer substrate, the inorganic electrolyte and the holes in the composite porous membrane can all transport active metal ions, which increases transport paths of the active metal ions, thereby increasing the transport rate of the active metal ions and accordingly improving the power performance of batteries.

## Description

### TECHNICAL FIELD

The present application relates to the field of batteries, and in particular, to a composite porous membrane, a preparation method therefor, a battery, and an electrical device.

### BACKGROUND

Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. A semi-solid battery is a battery in which a part of an electrolyte is in a solid state and is considered as one of the most promising power sources for next-generation electric vehicles and energy storage products because of its advantages, such as a high energy density, high safety, and long life. An in-situ polymerized semi-solid battery refers to a battery formed by an in-situ curing technology, specifically, a battery formed by injecting a liquefied monomer into a cell and initiating in-situ polymerization of the monomer to form a film under a certain condition. Power performance of the battery may be degraded by curing the electrolyte via the in-situ curing technology.

### SUMMARY

In view of the technical problems in the background, the present application provides a composite porous membrane, which can increase the migration rate of active metal ions and improve the power performance of a battery.

A first aspect of the present application provides a composite porous membrane. The composite porous membrane includes an organic polymer substrate and an inorganic electrolyte, the inorganic electrolyte being dispersed in the organic polymer substrate. Holes of different diameters are formed in the composite porous membrane, and the ionic conductivity of the composite porous membrane is 1×10⁻⁴ S/cm - 5×10⁻⁴ S/cm. Thus, the organic polymer substrate, the inorganic electrolyte, and the holes in the composite porous membrane can all transport active metal ions, which increases transport paths of the active metal ions, thereby increasing the transport rate of the active metal ions and accordingly improving the power performance of batteries.

According to some embodiments of the present application, the ionic conductivity of the composite porous membrane is 2×10⁻⁴ S/cm - 5×10⁻⁴ S/cm. Therefore, the transport ability of the composite porous membrane for active metal ions is improved, improving power performance of a battery.

According to some embodiments of the present application, a mass percentage of the organic polymer substrate to the inorganic electrolyte is 3 to 5.67. Therefore, the ionic conductivity of the composite porous membrane is improved, improving the transport ability of the composite porous membrane for active metal ions, and improving power performance of a battery.

According to some embodiments of the present application, the composite porous membrane satisfies one or more of the following conditions: Based on the total mass of the composite porous membrane, the mass percentage of the organic polymer is 75% - 85%; and based on the total mass of the composite porous membrane, the mass percentage of the inorganic electrolyte is 15% - 25%. Therefore, a content of an organic polymer is relatively large, which may reduce the influence of the inorganic electrolyte on the porosity of the composite porous membrane, and improve the transport rate of the composite porous membrane to the remaining liquid electrolyte.

According to some embodiments of the present application, the composite porous membrane satisfies one or more of the following conditions: the organic polymer substrate includes one or more of polyvinylidene fluoride, polyhexafluoropropylene, polyvinyl chloride, polyacrylonitrile, polystyrene, polyvinyl acetate, polymethyl methacrylate, and polyethylene dimethacrylate; and the inorganic electrolyte includes one or more of silicon dioxide, aluminum oxide, lithium aluminum titanium phosphate, lithium lanthanum zirconium oxide, and lithium aluminum germanium phosphoate. Thus, the organic polymers and the inorganic electrolytes of the above types may transport active metal ions, thereby improving power performance of a battery.

According to some embodiments of the present application, the pores of different diameters have a diameter of 0.5 nm to 5 µm. By enabling the diameter of the pores in the composite porous membrane within the above range, pores with a small diameter may limit passing of polyanionic ions, increasing a number of migrated active metal ions, and improving a battery capacity. Pores with a large diameter may transport the liquid electrolyte, improving a migration rate of active metal ions.

According to some embodiments of the present application, the porosity of the composite porous membrane is 40% to 70%. Thus, the migration rate of the active metal ions is improved, improving power performance of a battery.

According to some embodiments of the present application, a thickness of the composite porous membrane is 8 µm to 20 µm. Thus, a multi-dimensional channel is provided for transporting active metal ions to improve a transport rate of the active metal ions.

A second aspect of the present application provides a method for preparing the composite porous membrane according to the first aspect of the present application, including mixing and heating an organic polymer and an inorganic electrolyte to form a membrane, and performing pore forming on the membrane to form a composite porous membrane having a plurality of pores having different diameters, where an ionic conductivity of the composite porous membrane is 1×10⁻⁴S/cm - 5×10⁻⁴S/cm. Therefore, the composite porous membrane prepared by the method has all the features and advantages of the composite porous membrane described above, and details are not described herein again. In general, there are at least advantages of a high migration rate of active metal ions and excellent power performance of a battery.

According to some embodiments of the present application, the method includes mixing the organic polymer, the inorganic electrolyte, and a pore-forming agent, and heating for drying to form the composite porous membrane. Therefore, pores of different diameters are formed on the composite porous membrane, which is beneficial to the transport of a liquid electrolyte, thereby improving the migration rate of the active metal ions and improving power performance of a battery.

A third aspect of the present application provides a battery, including the composite porous membrane provided in the first aspect of the present application or the composite porous membrane prepared by using the method provided in the second aspect of the present application. Therefore, the battery has all the features and advantages of the composite porous membrane described above, and details are not described herein again. In general, at least an advantage of excellent power performance exists.

According to some embodiments of the present application, the battery cell includes a semi-solid battery. Therefore, power performance of the semi-solid battery is improved.

A fourth aspect of the present application provides an electric device, including the battery provided in the third aspect of the present application.

Additional aspects and advantages of the present application will be partly provided in the following description, and partly become evident in the following description or understood through the practice of the present application.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic diagram of a battery according to an implementation of the present application.
FIG. 2 is an exploded view of the battery according to an implementation of the present application shown in FIG. 1.
FIG. 3 is a schematic diagram of a battery module according to an implementation of the present application.
FIG. 4 is a schematic diagram of a battery pack according to an implementation of the present application.
FIG. 5 is an exploded diagram of the battery pack according to an implementation of the present application shown in FIG. 4.
FIG. 6 is a schematic diagram of an electric device using a battery as a power supply according to an implementation of the present application.
FIG. 7 is an SEM diagram of a composite porous membrane in Example 2 of the present application.
FIG. 8 is an enlarged schematic diagram of FIG. 7.

Description of reference signs:
1, battery pack; 2, upper box body; 3, lower box body; 4, battery module; 5, semi-solid battery; 51, case; 52, electrode assembly; 53: cover plate.

### DETAILED DESCRIPTION OF PREFERRED EMBODIMENTS

Embodiments of the technical solutions of the present application are described in detail below. The following embodiments are only used to more clearly illustrate the technical solutions of the present application, and thus are used as examples only, and are not intended to limit the protection range of the present application.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of batteries continues to expand, a market demand for the batteries continues to increase.

In an in-situ polymerized semi-solid battery, a content of a liquid electrolyte in the battery may be effectively reduced. When an energy density of the battery is improved, the content of the liquid electrolyte is reduced to reduce side reactions caused by the liquid electrolyte, improving service life of a battery. However, during in-situ polymerization, as in-situ polymerization reaction proceeds, a cured electrolyte blocks pores of a separator, and the transport of active metal ions can only be carried out through peristaltic movement of polymer chain segments. Compared with the transport of the active metal ions through the liquid electrolyte, the transport of the active metal ions through the peristaltic movement of the solid polymer chain segments reduces the transport rate of the active metal ions, thereby reducing power performance of a battery. The pores of the separator are blocked, flow of the remaining liquid electrolyte is also prevented, further reducing the transport rate of the active metal ions. Migration of the active metal ions is hindered during charging and discharging, reducing a battery capacity.

The present application provides a composite porous membrane, which has a high ionic conductivity may improve the transport capacity of active metal ions, and improve the power performance of the battery. Specifically, the composite porous membrane includes an organic polymer substrate and an inorganic electrolyte. The organic polymer substrate may be used for transporting active metal ions through peristaltic movement of chain segments. The inorganic electrolyte may be used for transporting active metal ions in a way that the active metal ions continuously fill vacancies and are deintercalated from the vacancies. The composite porous membrane is further formed with pores of different diameters. The pores of different diameters can allow the remaining liquid electrolyte in a semi-solid battery to pass through, and then transport of the active metal ions through the liquid electrolyte. A plurality of transport modes of the active metal ions improves the transport rate of the active metal ions, and thus, the power performance of the battery can be improved. The flow of the liquid electrolyte in the pores of different diameters may also reduce resistance to transport of active metal ions during charging and discharging, and increase a migration amount of active metal ions, thereby improving a battery capacity.

The composite porous membrane disclosed in the embodiments of the present application is applicable to a battery, and the battery disclosed in the embodiments of the present application can be used in an electric device using a battery as a power source or various energy storage systems using a battery as an energy storage element. The electric device may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of this application provides a composite porous membrane, including an organic polymer substrate and an inorganic electrolyte, wherein the inorganic electrolyte is dispersed in the organic polymer substrate, a plurality of holes of different diameters are formed in the composite porous membrane, and an ionic conductivity of the composite porous membrane being 1×10⁻⁴ S/cm - 5×10⁻⁴ S/cm.

The composite porous membrane provided by the present application has a high ionic conductivity and may be directly placed in a battery for transport of active metal ions without undergoing an in-situ polymerization reaction process, which may reduce a risk of blocking a separator by a solid electrolyte formed in a curing process, and also, a composite separator has a high ionic conductivity, which can improve a transport capacity of active metal ions and improve power performance of a battery. Specifically, when the composite porous membrane is placed in a semi-solid-state battery, the organic polymer substrate may transport the active metal ions through peristaltic movement of chain segments. During charging, active metal ions near an inorganic electrolyte on a negative electrode side move to the negative electrode, vacancies are generated in the inorganic electrolyte close to the negative electrode, and the active metal ions may continuously fill the vacancies and then be deintercalated from the vacancies, so as to transport the active metal ions. The composite porous membrane is further formed with pores of different diameters. Pores with larger diameters may allow the liquid electrolyte to pass through, thereby transporting the active metal ions through the liquid electrolyte. The active metal ions are transported in the above many manners, which improves a transport rate of the active metal ions, and thus can improve power performance of a battery. Pores with smaller diameter may allow solvated active metal ions with smaller ionic radius to pass through, while polymer-based anions with larger ionic radius may not pass through the pores, which may increase a number of active metal ions migrating across the composite porous membrane and improve performance of a battery capacity. Additionally, the flow of the liquid electrolyte in the pores may also reduce resistance to transport of active metal ions during charging and discharging, and increase a migration amount of active metal ions, thereby improving a battery capacity.

In the present application, a test method for the ionic conductivity of the composite porous membrane is based on a method of a confined symmetric battery, and the conductivity of the composite porous membrane is calculated by Rs obtained by testing symmetric batteries EI S having different numbers of layers of composite porous membranes.

In the present application, the active metal ions include lithium ions.

According to some embodiments of the present application, the ionic conductivity of the composite porous membrane may be 1×10⁻⁴ S/cm - 5×10⁻⁴ S/cm. For example, the ionic conductivity may be 1×10⁻⁴ S/cm, 1.5×10⁻⁴ S/cm, 2×10⁻⁴ S/cm, 2.5×10⁻⁴ S/cm, 3×10⁻⁴ S/cm, 3.5×10⁻⁴ S/cm, 4×10⁻⁴ S/cm, 4.5×10⁻⁴ S/cm, or 5×10⁻⁴ S/cm, or may be in a range of any of the above values. Therefore, the transport ability of the composite porous membrane for active metal ions may be improved, improving power performance of a battery. According to some specific embodiments of the present application, the ionic conductivity of the composite porous membrane may be 2×10⁻⁴ S/cm - 5×10⁻⁴ S/cm.

According to some embodiments of the present application, a mass percentage of the organic polymer substrate to the inorganic electrolyte may be 3 to 5.67. For example, it may be 3, 3.5, 4, 4.5, 5, 5.5 or 5.67, or the like, or may be a range formed by any of the above values. Therefore, the organic polymer substrate has a large content as a framework, which reduces filling of pores by the inorganic electrolyte and improves the transport rate of the composite porous membrane to the remaining liquid electrolyte. According to some specific embodiments of the present application, the mass percentage of the organic polymer substrate to the inorganic electrolyte may be 3.5 to 5.

In the present application, the contents of the organic polymer and the inorganic electrolyte may be tested by thermogravimetric. Specifically, 1. sample preparation: about 50 mg of a sample is weighted into an Al₂O₃ crucible, and shaken and leveled. 2. Parameter setting: under a nitrogen atmosphere, gas is purged at 60 mL/min, protective gas is purged at 20 mL/min. 3. Temperature rise process: an organic polymer is decomposed at a high temperature of 35°C to 600°C at a rate of 10°C/min, the mass of the remaining sample is the mass of the inorganic electrolyte, and a mass difference before and after the test is the content of the organic polymer.

According to some embodiments of the present application, based on the total mass of the composite porous membrane, the mass percentage of the organic polymer may be 75% - 85%, for example, may be 75%, 76%, 77%, 78%, 79%, 80%, 81%, 82%, 83%, 84%, or 85%, or may be a range composed of any of the above numerical values. Therefore, the composite porous membrane contains a large amount of the organic polymer, and thus a weight of the composite porous membrane can be reduced to improve an energy density of a battery.

According to some embodiments of the present application, based on the total mass of the composite porous membrane, the mass percentage of the inorganic electrolyte is 15% - 25%, for example, may be 15%, 16%, 17%, 18%, 19%, 20%, 21%, 22%, 23%, 24%, or 25%, or may be a range composed of any of the above values. Therefore, the content of the inorganic electrolyte is relatively small, which may reduce the influence of the inorganic electrolyte on the porosity, improves a transport rate of the remaining liquid electrolyte through the composite porous membrane, and also may reduce a weight of the composite porous membrane and improve an energy density of a battery.

According to some embodiments of the present application, the organic polymer substrate may include one or more of polyvinylidene fluoride, polyhexafluoropropylene, polyvinyl chloride, polyacrylonitrile, polystyrene, polyvinyl acetate, polymethyl methacrylate, and polyethylene dimethacrylate. Therefore, the organic polymer of the above types may directly be formed into a composite porous membrane and placed in a battery. During charging or discharging, active metal ions are conducted through peristaltic movement of polymer chain segments, thereby improving transport of active metal ions through the composite porous membrane.

According to some embodiments of the present application, the inorganic electrolyte includs one or more of silicon dioxide, aluminum oxide, lithium aluminum titanium phosphate, lithium lanthanum zirconium oxide, and lithium aluminum germanium phosphoate. Therefore, the inorganic electrolytes of the above types may enable continuously filling of vacancies with active metal ions and deintercalation of the active metal ions from the vacancies to transport the active metal ions, thereby improving transport efficiency of the active metal ions.

According to some embodiments of the present application, the plurality of pores may have a diameter ranging from 0.5 nm to 5 µm. That is, larger pores in the plurality of pores have a diameter of less than or equal to 5 µm, and smaller pores have a diameter of greater than or equal to 0.5 nm. Therefore, the composite porous membrane is formed with pores of different diameters. The large pores may enable rapid transport of a liquid electrolyte and improve a transport rate of active metal ions. Small pores may allow solvated active metal ions to pass through, while polymer-based anions with larger ionic radius cannot pass through the small pores, thereby increasing a migration amount of the active metal ions and further improving a battery capacity.

In the present application, the diameters of the pores of different diameters may be tested by a scanning electron microscope. Specifically, an average value may be calculated by testing diameters and a number of all pores in an area.

According to some embodiments of the present application, the porosity of the composite porous membrane may be 40% to 70%. For example, the porosity may be 40%, 45%, 50%, 55%, 60%, 65%, 70%, or the like, or may be a range formed by any of the above values. Thus, when the porosity of the composite porous membrane is within the above range, a transport rate of active metal ions is increased, and power performance of a battery is improved.

In the present application, a test method of the porosity is: pretreatment of a composite porous membrane in a dry room: selecting more than 20 sheets of composite porous membranes by using a tweezer; filling the sheets in a sample cup; recording a quantity of sheets; and calculating an apparent volume. Testing: the sample cup containing a sample was placed in a true density tester, the test system was sealed, a helium gas was introduced according to the procedure, the pressure of a gas in a sample chamber and an expansion chamber was detected, and then the true volume was calculated according to the Bohr's law (PV=nRT), so as to obtain the porosity of a sample to be tested.

According to some embodiments of the present application, a thickness of the composite porous membrane is 8 µm to 20 µm. For example, it may be 8 µm, 10 µm, 12 µm, 14 µm, 16 µm, 18 µm or 20 µm or the like, or may be a range formed by any of the above values. Thus, power performance of a battery is improved, and probability of self-discharge of the battery is reduced.

In the present application, the thickness of the composite porous membrane may be measured by a micrometer.

A second aspect of the present application provides a method for preparing the composite porous membrane provided in the first aspect of the present application, including: mixing and heating an organic polymer and an inorganic electrolyte to form a membrane, and performing pore forming on the membrane to form a composite porous membrane having a plurality of pores having different diameters, where an ionic conductivity of the composite porous membrane is 1×10⁻⁴S/cm - 5×10⁻⁴S/cm. Specifically, the organic polymer and the inorganic electrolyte are mixed, heated and stirred to form a uniformly mixed glue solution. The glue solution is extruded by an extruder to obtain a membrane structure. The membrane structure is pore-formed to obtain a composite porous membrane having pores of different diameters. Thus, the composite porous membrane prepared by the method has a high ionic conductivity, which may improve a capacity for transporting active metal ions and improve power performance of a battery. Specifically, when the composite porous membrane is placed in a semi-solid battery, both the organic polymer substrate and the inorganic electrolyte can enable direct transport of the active metal ions. The composite porous membrane is further formed with pores of different diameters. Pores with larger diameters may allow the liquid electrolyte to pass through, so that the active metal ions are transported through the liquid electrolyte. A plurality of transport modes of the active metal ions improves the transport rate of the active metal ions, and thus the power performance of the battery can be improved.

According to some embodiments of the present application, the method may further include mixing the organic polymer, the inorganic electrolyte, and a pore-forming agent, and heating for drying to form the composite porous membrane. Specifically, the organic polymer, the inorganic electrolyte, and the pore-forming agent are mixed, heated and stirred to form a uniformly mixed glue solution. The glue solution is extruded by an extruder and dried to obtain a membrane structure. The membrane structure is pore-formed to obtain a composite porous membrane having a plurality of pores of different diameters.

As an example, a temperature for mixing and heating the organic polymer, the inorganic electrolyte, and the pore-forming agent may be 50°C to 90°C, for example, 50°C, 60°C, 70°C, 80°C or 90°C, or may be a range composed of any of the above numerical values. Therefore, the organic polymer and the inorganic electrolyte are liquid, improving uniformity of a mixture of the organic polymer and the inorganic electrolyte.

According to some embodiments of the present application, a mass percentage of the organic polymer substrate to the inorganic electrolyte may be 3 to 5.67. For example, it may be 3, 3.5, 4, 4.5, 5, 5.5 or 5.67, or the like, or may be a range formed by any of the above values. Therefore, the organic polymer substrate has a large content as a framework, which reduces filling of pores by the inorganic electrolyte and improves the transport rate of the composite porous membrane to the remaining liquid electrolyte. According to some specific embodiments of the present application, the mass percentage of the organic polymer substrate to the inorganic electrolyte may be 3.5 to 5.

A third aspect of the present application provides a battery, including the composite porous membrane provided in the first aspect of the present application or the composite porous membrane prepared by using the method provided in the second aspect of the present application. Therefore, the battery has all the features and advantages of the composite porous membrane described above, and details are not described herein again. In general, at least an advantage of excellent power performance exists.

As an example, the battery includes a semi-solid battery.

Generally, the semi-solid battery includes a positive electrode sheet, and a negative electrode sheet. During charge and discharge of the battery, active metal ions are intercalated and deintercalated back and forth between the positive electrode sheet and the negative electrode sheet.

### [Positive electrode plate]

The positive electrode sheet includes a positive electrode current collector and a positive electrode active material layer provided on at least one surface of the positive electrode current collector, the positive electrode active material layer including the positive electrode active material in the first aspect of the present application.

As an example, the positive electrode current collector has two surfaces opposite to each other in its own thickness direction, and the positive electrode active material layer is disposed on either one or both of the two opposite surfaces of the positive electrode current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, when the battery is a lithium-ion battery, the positive electrode active material may use a positive electrode active material well-known in the art for lithium-ion batteries. As an example, the positive active material may include at least one of the following materials: olivine-structured lithium-containing phosphate, lithium transition metal oxide, and their respective modified compounds. However, the present application is not limited to these materials, and other conventional materials that can be used as a positive active material of a battery may also be used. These positive active materials may be used alone or in combination of two or more thereof. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.8}Co_{0.15}Al_{0.05}O₂), modified compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

The modified compounds of each material may be a compound of the material subjected to doping modification and/or surface coating modification.

### [Negative electrode plate]

The negative electrode sheet includes a negative electrode current collector and a negative electrode active material layer provided on at least one surface of the negative electrode current collector, the negative electrode active material layer including a negative electrode active material.

As an example, the negative electrode current collector has two surfaces opposite in its own thickness direction, and the negative electrode active material layer is provided on either one or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode active material may use a negative electrode active material well-known in the art for batteries. As an example, the negative active material may include at least one of the following materials: synthetic graphite, natural graphite, soft carbon, hard carbon, a silicon-based material, a tin-based material, titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. When the battery is a lithium ion battery, the titanate uses lithium titanate. When the battery is a sodium ion battery, the titanate uses sodium titanate. However, the present application is not limited to these materials, and other conventional materials that can be used as a negative electrode active material of a battery may also be used. These negative electrode active materials may be used alone or in combination of two or more thereof.

In some implementations, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some implementations, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode active material layer further optionally includes other auxiliaries, for example, a thickener (such as sodium carboxymethyl cellulose (CMC-Na)).

In some implementations, the negative electrode sheet may be prepared by the following method: the above components for preparing the negative electrode sheet, e.g., the negative electrode active material, the conductive agent, the binder, or any other components, are dispersed in a solvent (e.g., deionized water) to form a negative electrode slurry; then, the negative electrode slurry is coated on the negative electrode current collector. After processes such as drying and cold pressing, the negative electrode sheet can be obtained.

### [Electrolyte solution]

In some implementations, the semi-solid battery may further include a liquid electrolyte.

In some implementations of the present application, the liquid electrolyte solution may further include an electrolyte salt and a solvent.

In some implementations, the electrolyte salt may include at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the semi-solid battery may further include a separator.

### [Separator]

The type of the separator is not particularly limited in the present application, and any well-known porous separator with good chemical stability and mechanical stability may be used.

In some implementations, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the positive electrode sheet and the negative electrode sheet of the semi-solid battery may be manufactured into the electrode assembly through a winding process or a lamination process.

In some implementations, the semi-solid battery may include an outer package. The outer package may be used to package the above electrode assembly and electrolyte.

In some implementations, the outer package of the semi-solid battery may be a hard casing, for example, a hard plastic casing, an aluminum casing, or a steel casing. The outer package of the battery may also be a pouch, such as a bag-type pouch. The material of the pouch may be plastic, and examples of the plastic include polypropylene, polybutylene terephthalate, and polybutylene succinate.

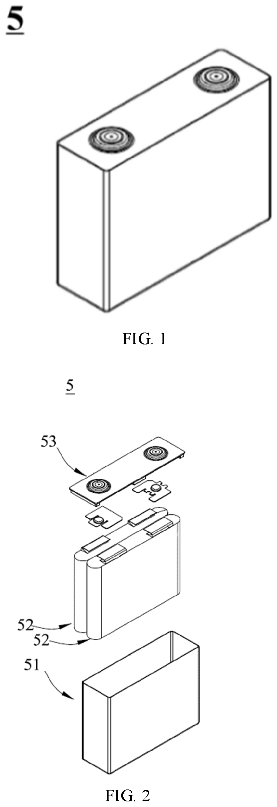

The shape of the semi-solid battery is not particularly limited in the present application, and may be a cylindrical shape, a square shape, or any other shape. For example, FIG. 1 shows a semi-solid battery 5 with a square structure as an example.

In some implementations, referring to FIG. 2, the outer package may include a housing 51 and a cover plate 53. The housing 51 may include a bottom plate and side plates connected to the bottom plate, and the bottom plate and the side plates define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte is impregnated into the electrode assembly 52. There may be one or a plurality of electrode assemblies 52 included in the battery 5, and the number may be selected by those skilled in the art according to specific practical requirements.

In some implementations, the semi-solid battery may be assembled into a battery module, there may be one or a plurality of semi-solid batteries included in the battery module, and the specific number may be selected by those skilled in the art according to the application and capacity of the battery module.

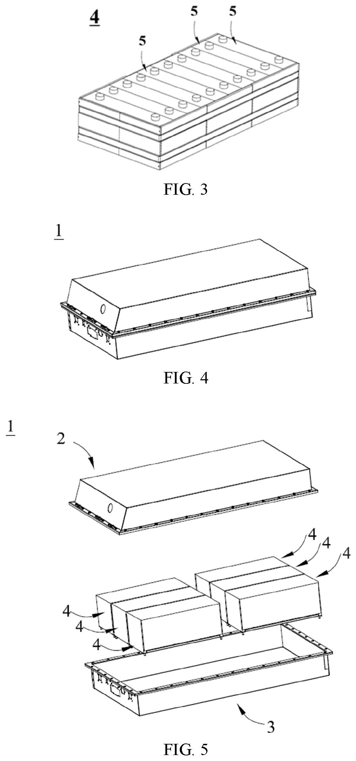

FIG. 3 shows a battery module 4 as an example. Referring to FIG. 3, in the battery module 4, a plurality of semi-solid batteries 5 may be arranged sequentially in the length direction of the battery module 4. Certainly, the battery cells may alternatively be arranged in any other manner. Further, the plurality of semi-solid batteries 5 may be fixed by a fastener.

Optionally, the battery module 4 may further include a casing having an accommodating space in which the plurality of semi-solid batteries 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

FIG. 4 and FIG. 5 show a battery pack 1 as an example. Referring to FIG. 4 and FIG. 5, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In addition, the present application further provides an electric device, including the semi-solid battery provided in the present application. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

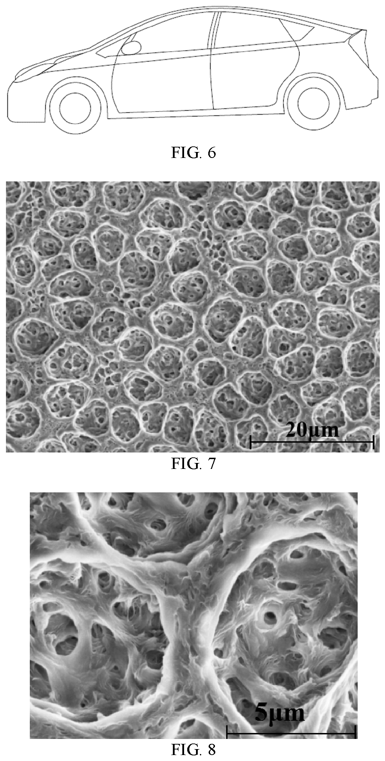

FIG. 6 shows an electric device as an example. The electric device is a pure electric vehicle, a hybrid electric vehicle, a plug-in hybrid electric vehicle, or the like. In order to meet the demand for high power and high energy density of a battery by the electric device, a battery pack or a battery module may be used.

In another example, the electric apparatus may be a cell phone, a tablet computer, a notebook computer, or the like. This apparatus is generally required to be thin and lightweight, and may use a battery as a power supply.

In order to make the technical problems, technical solutions, and advantageous effects solved by the embodiments of the present application clearer, the following will be further described in detail with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

### Example 1

### 1. Preparation of Positive Electrode Sheet

NCM96 (Ni_{0.94}Co_{0.03}Mn_{0.03}O₂), superconducting carbon (SuperP), and polyvinylidene fluoride (PVDF) were added at a mass percentage of 97%: 1%: 2% to N-Methylpyrrolidone (NMP), stirred uniformly under the action of the vacuum stirrer, coated on both sides of an aluminum foil, dried in the oven, and cold-pressed to obtain a positive electrode sheet.

### 2. Preparation of Negative Electrode Sheet

Artificial graphite and a silicon-carbon composite material (a mass percentage of the artificial graphite to the silicon-carbon composite material was 6:4), a conductive agent carbon black, carbon nanotubes (CNT), a binder styrene-butadiene rubber (SBR), and a thickener sodium hydroxymethylcellulose (CMCNa) were added in a weight ratio of 94.5%: 1%: 0.375%: 2.8%: 1.325% to deionized water, mixed and stirred evenly, coated on both sides of a negative current collector copper foil, followed by oven drying and cold pressing to obtain a negative electrode plate.

### 3. Preparation of Electrolyte Solution

In a glove box under an argon atmosphere (H₂O<0.1 ppm, and O₂<0.1 ppm), ethylene carbonate (EC), ethyl methyl carbonate (EMC), and diethyl carbonate (DEC) were mixed at a volume ratio of 1:1:1 to obtain an organic solvent, and fully-dried electrolyte salt LiPF6 was dissolved in the above solvent, and mixed uniformly to obtain an electrolyte solution with a concentration of 1 mol/L.

### 4. Composite porous membrane

An organic polymer polyvinylidene fluoride, an inorganic electrolyte silica, a pore-forming agent mineral oil, and a plasticizer butyl phthalate were stirred at 70°C to form a glue solution, where based on the total mass of the glue solution, the mass percentage of the organic polymer, the inorganic electrolyte, the pore-forming agent, and the plasticizer was 63.75%: 21.25%: 13%: 2%, with a rotation speed of 100 r/min and a time of 1h, the mixed glue solution was obtained and was subjected to defoaming treatment, extruded by an extruder, and laid on a surface of a carrier of a mirror roller, followed by drying to obtain a composite porous membrane.

### 5. Preparation of lithium-ion battery

The positive electrode sheet, the composite porous membrane, and the negative electrode sheet were wound in sequence to obtain a bare cell; and the bare cell was placed in a packaging shell, dried and then injected with an electrolyte, and subjected to procedures such as vacuum sealing, standing, formation, and shaping to obtain a lithium-ion battery. In the lithium-ion battery, the content of the liquid electrolyte is 0.4 g/Ah.

The preparation methods for semi-solid batteries in Examples 2 to 12, Comparative Example 2, and Comparative Example 3 were the same as that in Example 1, and the differences were detailed in Table 1.

### Preparation of Semi-Solid Battery in Comparative Example 1:

1. A positive electrode plate and a negative electrode plate were prepared with the method the same as the method in Example 1 and wound in sequence to obtain a bare cell.
2. In-situ polymerization is used to form a separator.

Vinylene carbonate, acrylonitrile (AN) monomers, and an azobisisobutyronitrile (AIBN) initiator are added into an electrolyte solvent, where the electrolyte solvent is ethylene carbonate (EC): diethyl carbonate (DEC): ethyl methyl carbonate (EMC), where a volume ratio of EC: DEC: EMC was 1:1:1. The mass percentages of EC, DEC, and EMC in an electrolyte were all 20%. The mass percentage of the acrylonitrile monomers in the electrolyte was 9%. The mass percentage of azobisisobutyronitrile in the electrolyte was 1%. Additives fluoroethylene carbonate (FEC), lithium bistrifluoromethylsulfonylimide, and lithium hexafluorophosphate were added to the electrolyte according to the mass percentage of 4:6. The mass percentage of FEC was 30%, the sum of the concentrations of lithium bistrifluoromethylsulfonylimide and lithium hexafluorophosphate was 1.01 mol/L. The liquid electrolyte was added to a bare cell and sealed under vacuum. After high-temperature curing, formation, and capacity grading, an in-situ cured cell was prepared.

The preparation method of the composite porous membrane in Example 2 is the same as that in Example 1, except that, based on the total mass of the glue solution, a mass percentage of the organic polymer, the inorganic electrolyte, the pore-forming agent, and the plasticizer is 68%: 17%: 13%: 2%.

The preparation method of the composite porous membrane in Example 3 is the same as that in Example 1, except that based on the total mass of the glue solution, a mass percentage of the organic polymer, the inorganic electrolyte, the pore-forming agent, and the plasticizer is 68.85%: 16.15%: 13%: 2%.

The preparation method of the composite porous membrane in Example 4 is the same as that in Example 1, except that, based on the total mass of the glue solution, a mass percentage of the organic polymer, the inorganic electrolyte, the pore-forming agent, and the plasticizer is 72.25%: 12.75%: 13%: 2%.

The preparation method of the composite porous membrane in Examples 5 to 8 is the same as that in Example 1, except that, based on the total mass of the glue solution, a mass percentage of the organic polymer, the inorganic electrolyte, the pore-forming agent, and the plasticizer is 68%: 17%: 13%: 2%.

The preparation method of the composite porous membrane in Example 9 is the same as that in Example 1, except that, based on the total mass of the glue solution, a mass percentage of the organic polymer, the inorganic electrolyte, the pore-forming agent, and the plasticizer is 68%: 17%: 8%: 5%.

The preparation method of the composite porous membrane in Example 10 is the same as that in Example 1, except that, based on the total mass of the glue solution, a mass percentage of the organic polymer, the inorganic electrolyte, the pore-forming agent, and the plasticizer is 66%: 19%: 11%: 4%.

The preparation method of the composite porous membrane in Example 11 is the same as that in Example 1, except that, based on the total mass of the glue solution, a mass percentage of the organic polymer, the inorganic electrolyte, the pore-forming agent, and the plasticizer is 66%: 19%: 14.1%: 0.9%.

The preparation method of the composite porous membrane in Example 12 is the same as that in Example 1, except that, based on the total mass of the glue solution, a mass percentage of the organic polymer, the inorganic electrolyte, the pore-forming agent, and the plasticizer is 66%: 19%: 14.5%: 0.5%.

The preparation method of the composite porous membrane in Example 2 is the same as that in Example 1, except that, based on the total mass of the glue solution, a mass percentage of the organic polymer, the inorganic electrolyte, the pore-forming agent, and the plasticizer is 59.5%: 25.5%: 13%: 2%.

The preparation method of the composite porous membrane in Comparative Example 3 is the same as that in Example 1, except that, based on the total mass of the glue solution, a mass percentage of the organic polymer, the inorganic electrolyte, the pore-forming agent, and the plasticizer is 76.5%: 8.5%: 13%: 2%.

**Table 1**

| | Organic polymer substrate material | Organic Polymer Content/% | Inorganic electrolyte material | Inorganic Electrolyte Content/% | Ratio of organic polymer substrate content to inorganic electrolyte content | Diameter of gradient pores | Porosity**/** % | Thickness of Composite Porous Membrane**/**µm |
|---|---|---|---|---|---|---|---|---|
| Comparative Example1 | Polyacrylonitrile | 100 | / | / | / | / | 24 | 15.1 |
| Comparative Example**2** | Polyvinylidene fluoride | 70 | Silica | 30 | 2.33 | 3.4 µm | 42 | 15.1 |
| Example **1** | Polyvinylidene fluoride | 75 | Silica | 25 | 3.00 | 3.4 µm | 46 | 15.1 |
| Example **2** | Polyvinylidene fluoride | 80 | Silica | 20 | 4.00 | 3.4 µm | 48 | 15.1 |
| Example **3** | Polyvinylidene fluoride | 81 | Silica | 19 | 4.26 | 3.4 µm | 50 | 15.1 |
| Example **4** | Polyvinylidene fluoride | 85 | Silica | 15 | 5.67 | 3.4 µm | 56 | 15.1 |
| Comparative Example 3 | Polyvinylidene fluoride | 90 | Silica | 10 | 9.00 | 3.4 µm | 60 | 15.1 |
| Example **5** | Polyvinylidene fluoride | 80 | Silica | 20 | 4.00 | 3.4 µm | 60 | 7 |
| Example **6** | Polyvinylidene fluoride | 80 | Silica | 20 | 4.00 | 3.4 µm | 60 | 8 |
| Example **7** | Polyvinylidene fluoride | 80 | Silica | 20 | 4.00 | 3.4 µm | 60 | 20 |
| Example **8** | Polyvinylidene fluoride | 80 | Silica | 20 | 4.00 | 3.4 µm | 60 | 22 |
| Example **9** | Polyvinylidene fluoride | 80 | Silica | 20 | 4.00 | 3.4 µm | 35 | 15.1 |
| Example **10** | Polyvinylidene fluoride | 80 | Silica | 20 | 4.00 | 3.4 µm | 40 | 15.1 |
| Example **11** | Polyvinylidene fluoride | 80 | Silica | 20 | 4.00 | 3.4 µm | 70 | 15.1 |
| Example **12** | Polyvinylidene fluoride | 80 | Silica | 20 | 4.00 | 3.4 µm | 75 | 15.1 |

### Performance tests:

### 1. Test Method of Power Performance

In a three-electrode laminated test, a cell with three electrodes is taken, where a copper wire is used as a reference electrode. Then, the laminated battery cell was tested for the lithium precipitation charging rate at each SOC at 25°C. The maximum charging rate was terminated when the potential of the reference electrode dropped to 0 mV, and the maximum charging rate at this SOC was recorded. According to this method, 5% SOC was used as a point, the maximum charging rate was tested at 5% SOC intervals, e.g., from 20% SOC, 25% SOC, 30% SOC up to 100% SOC, and the continuous charging time from 20% SOC to 80% SOC was calculated according to the maximum charging rate within the range of 20% SOC to 80% SOC obtained by this test, which was the fast-charging time.

### 2. Performance of Battery Capacity

The prepared battery cell was allowed to stand at 25°C for 2 h, ensuring that the temperature of the battery cell was 25°C. At 25°C, the battery cell was charged at 0.1C to a charge cutoff voltage of 4.25 V, and then charged at a constant voltage continuously at the charge cutoff voltage until the current reached 0.02C, and the charge was cut off (where C represented a rated capacity of the battery cell). The battery cell was allowed to stand at 25°C for 0.5 h. At 25°C, the battery cell was discharged at 0.1C to a discharge cutoff voltage of 2.7 V, and a total discharge capacity C₀ discharged from the battery cell was recorded.

Test results of batteries in Examples 1 to 12 and Comparative Examples 1 to 3 are shown in Table 2.

**Table 2**

| | Ionic conductivity of Composite Porous Membrane × 10⁻⁴/S/cm | Power Performance /min | Performance of a capacity (mAh/g) |
|---|---|---|---|
| Comparative Example 1 | 0.2 | 24.61 | 215.62 |
| Comparative Example 2 | 0.8 | 23.2 | 226.92 |
| Example 1 | 1 | 15.9 | 227.01 |
| Example 2 | 2 | 14.6 | 228.12 |
| Example 3 | 3 | 13.9 | 228.61 |
| Example 4 | 5 | 12.8 | 229.89 |
| Comparative Example 3 | 6.2 | 22 | 216.2 |
| Example 5 | 2 | 11.1 | 218.14 |
| Example 6 | 2 | 12.2 | 219.62 |
| Example 7 | 2 | 16.9 | 228.92 |
| Example 8 | 2 | 19.4 | 228.93 |
| Example 9 | 2.1 | 16.2 | 228.16 |
| Example 10 | 3.8 | 15.2 | 228.17 |
| Example 11 | 4.9 | 11.6 | 220.17 |
| Example 12 | 5.2 | 11.2 | 217.13 |

Conclusion: It can be seen from comparison between Examples 1-12 and Comparative Example 1 that, by disposing the composite porous membrane in the semi-solid battery, the ionic conductivity of the composite porous membrane can be improved, thereby improving the transport rate of the lithium ions through the composite porous membrane and improving the power performance of the battery, compared with a separator formed by in-situ polymerization. Since the composite porous membrane has pores of different diameters, a number of lithium ions migrating across the composite porous membrane may be increased, thereby improving the performance of the battery capacity.

It can be seen from comparison between Examples 1 to 12 and Comparative Examples 2 and 3 that by setting the ionic conductivity of the composite porous membrane within the range of 1×10⁻⁴ S/cm to 5×10⁻⁴ S/cm, the transport rate of lithium ions through the composite porous membrane can be improved, improving the output performance of the battery and the performance of the battery capacity.

It can be seen from Examples 1-4 that, by adjusting the contents of the organic polymer and the inorganic electrolyte in the composite porous membrane, the ionic conductivity of the composite porous membrane can be adjusted, thereby improving the transport rate of the lithium ions through the composite porous membrane and improving the power performance of the battery and the performance of the battery capacity.

It can be seen from Examples 5-8 that, by adjusting the thickness of the composite porous membrane, a multi-dimensional channel can be provided for transporting lithium ions, thereby improving the transport rate of lithium ions through the composite porous membrane, and improving the power performance of the battery and the performance of the battery capacity.

It can be seen from Examples 9-12 that, by adjusting the porosity of the composite porous membrane, the ionic conductivity of the composite porous membrane can be adjusted, thereby improving the transport rate of the lithium ions through the composite porous membrane, improving the power performance of the battery, and improving the performance of the battery capacity.

FIG. 7 and FIG. 8 are SEM images of the composite porous membrane in Example 2. It can be seen from the images that the composite porous membrane has pores of different diameters, which can further improve the transport rate of lithium ions and improve the power performance of the battery. Resistance to lithium ion transport is also reduced during charging or discharging, increasing a number of migrated lithium ions and further improving the performance of the battery capacity.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A composite porous membrane, comprising an organic polymer substrate and an inorganic electrolyte, wherein the inorganic electrolyte is dispersed in the organic polymer substrate, a plurality of holes of different diameters are formed in the composite porous membrane, and an ionic conductivity of the composite porous membrane is 1×10⁻⁴ S/cm - 5×10⁻⁴ S/cm.

2. The composite porous membrane according to claim 1, wherein the ionic conductivity of the composite porous membrane is 2×10 ⁻⁴ S/cm - 5×10 ⁻⁴ S/cm.

3. The composite porous membrane according to claim 1 or 2, wherein a mass percentage of the organic polymer substrate to the inorganic electrolyte is 3 - 5.67.

4. The composite porous membrane according to any one of claims 1 to 3, wherein one or more of the following conditions are satisfied:
based on the total mass of the composite porous membrane, the mass percentage of the organic polymer is 75% - 85%; and
based on the total mass of the composite porous membrane, the mass percentage of the inorganic electrolyte is 15% - 25%.

5. The composite porous membrane according to any one of claims 1 to 4, wherein one or more of the following conditions are satisfied:
the organic polymer substrate comprises one or more of polyvinylidene fluoride, polyhexafluoropropylene, polyvinyl chloride, polyacrylonitrile, polystyrene, polyvinyl acetate, polymethyl methacrylate, and polyethylene dimethacrylate; and
the inorganic electrolyte comprises one or more of silicon dioxide, aluminum oxide, lithium aluminum titanium phosphate, lithium lanthanum zirconium oxide, and lithium aluminum germanium phosphoate.

6. The composite porous membrane according to any one of claims 1 to 5, wherein the plurality of pores has a diameter in a range of 0.5 nm to 5 µm.

7. The composite porous membrane according to any one of claims 1 to 6, wherein a porosity of the composite porous membrane is 40% to 70%.

8. The composite porous membrane according to any one of claims 1 to 7, wherein a thickness of the composite porous membrane is 8 µm to 20 µm.

9. A method for preparing the composite porous membrane according to any one of claims 1 to 8, comprising:
mixing and heating an organic polymer and an inorganic electrolyte to form a membrane, and performing pore forming on the membrane to form a composite porous membrane having a plurality of pores of different diameters, wherein an ionic conductivity of the composite porous membrane is 1×10⁻⁴S/cm - 5×10⁻⁴S/cm.

10. The method according to claim 9, wherein the organic polymer, the inorganic electrolyte, and a pore-forming agent are mixed and dried through heating to form the composite porous membrane.

11. The method according to claim 9 or 10, wherein a mass ratio of the organic polymer substrate to the inorganic electrolyte is 3 - 5.67.

12. A battery, comprising the composite porous membrane according to any one of claims 1 to 8 or the composite porous membrane prepared by using the method according to any one of claims 9 to 11.

13. The battery according to claim 12, wherein the battery comprises a semi-solid battery.

14. An electric device, comprising the battery according to claim 12 or claim 13.
